# EUROPÄISCHE PATENTANMELDUNG

(11) **EP 2 412 783 A1**
(43) Veröffentlichungstag der Anmeldung: **01.02.2012**
(21) Anmeldenummer: 10075333.4
(22) Anmeldetag: 30.07.2010
(51) Int. Cl.: C10G 1/04, C10C 3/00

(54) **Vorrichtung und Verfahren zum Trennen von Gemischen, welche Öl oder Bitumen und Zusatzstoffe enthalten**

(71) Anmelder: Physitron GmbH, 56422 Wirges (DE)
(72) Erfinder: Karsten, Waldemar, D-56422 Wirges. (DE); Winter, Thomas, D-56244 Otzingen (DE)
(74) Vertreter: Pfenning, Meinig & Partner GbR

(57) **Zusammenfassung**

Die vorliegende Erfindung bezieht sich auf eine Vorrichtung und ein Verfahren zum Trennen von Gemischen, welche Öl oder Bitumen und Zusatzstoffe enthalten. Die Vorrichtung und das Verfahren sind insbesondere auf die Trennung von Splitt und Bitumen in ausgebrochenen Asphalt-Straßenbelägen anwendbar. Außerdem kann damit auch bei Ölsänden und Ölschiefer die mineralische Phase von der Ölphase getrennt werden und eine Trennung von Bitumen und Trägerpappe bei Recycling von Bitumenpappe sowie von Ölbinder und Öl herbeigeführt werden. Dazu werden durch ein Lösungsmittel die einzelnen Bestandteile des Gemischs voneinander getrennt, wobei das Lösungsmittel das Öl oder Bitumen aufnimmt. In einem nächsten Schritt wird das Öl und Bitumen aus dem Lösungsmittel separiert, sodass auch das Lösungsmittel wiederverwendet werden kann.

## Beschreibung

Die vorliegende Erfindung bezieht sich auf eine Vorrichtung und ein Verfahren zum Trennen von Gemischen, welche Öl oder Bitumen und Zusatzstoffe enthalten. Die Vorrichtung und das Verfahren sind insbesondere auf die Trennung von Splitt und Bitumen in ausgebrochenen Asphalt-Straßenbelägen anwendbar. Außerdem kann damit auch bei Ölsänden und Ölschiefer die mineralische Phase von der Ölphase getrennt werden und eine Trennung von Bitumen und Trägerpappe bei Recycling von Bitumenpappe sowie von Ölbinder und Öl herbeigeführt werden.

Gemische aus Öl oder Bitumen und Zusatzstoffen finden eine breite Anwendung in vielen Bereichen der Technik. Im Straßenbau wird beispielsweise Asphalt, ein Gemisch aus Bitumen als Bindemittel und gemahlenen mineralischen Zusatzstoffen bestimmter Gesteinssorten und eines bestimmten Größenspektrums, als Belag verwendet. Zur Wiederverwertung von altem Straßenbelag wird dieser vom Untergrund abgefräst und zerkleinert, deponiert und später oder aber direkt neuem Asphaltbelag als Zuschlagsstoff wieder zugesetzt, wobei die mineralische Phase immer noch vom Bitumen ummantelt ist. Das Größenspektrum des mineralischen Teils kann daher nicht so umfassend variiert werden wie bei neuem, bislang noch nicht verwendetem Zuschlagsstoff. Es ist aus diesem Grund wünschenswert, den Bitumenanteil vom mineralischen Zusatzstoff zu trennen und beides getrennt und dosiert der Wiederverwendung zuzuführen. Ähnliches gilt auch für Ölsände oder Ölbinder, bei denen man für ein erfolgreiches Recycling Öl und Zusatzstoffe zuverlässig trennen möchte.

Aus dem Stand der Technik sind bereits Verfahren und Vorrichtungen zum Erreichen dieses Ziels bekannt. Die Druckschrift DE 10 2006 038 614 A1 beschreibt ein Verfahren, bei dem der Qualitätsverlust bei der Wiederverwertung von gebrochenem Ausbauasphalt durch Zugabe von chemischen Hilfsmitteln wie Weichmachern und Härtern bei Temperaturen von ca. 140 °C vermindert wird. Nachteilig an diesem Verfahren ist, dass eine vergleichsweise hohe Temperatur und zahlreiche Chemikalien verwendet werden müssen.

In DE 600 10 533 T2 wird ein Verfahren offenbart, bei dem der Zuschlagsstoff vom Bitumenanteil getrennt wird, indem eine thermische Zersetzung der Bitumenummantelung stattfindet. Bitumen wird dabei als Brennstoff genutzt und durch die Einleitung von heißen Gasen in eine Trommel, die das Ausbruchmaterial enthält, aktiviert. Das Verfahren weist jedoch den Nachteil auf, dass es an die Herstellung neuen Asphalts gekoppelt und nur mit hohem Energieaufwand durchführbar ist.

Der vorliegenden Erfindung liegt damit die Aufgabe zugrunde, ein Verfahren und eine Vorrichtung zu entwickeln, mit welchen eine zuverlässige Trennung eines Gemischs aus öl- oder bitumenhaltigen Stoffen und Zusatzstoffen gewährleistet ist, ohne dass eine Kopplung an die Herstellung neuen Asphalts vorliegt, und wobei die Zusatzstoffe und das öl- oder bitumenhaltige Material gelagert und bei Bedarf neu klassiert einer neuen Asphalterzeugung zugeführt werden können. Weiter soll der Energieeinsatz möglichst gering sein.

Diese Aufgabe wird erfindungsgemäß gelöst durch eine Vorrichtung nach Anspruch 1 und ein Verfahren nach Anspruch 10. Vorteilhafte Weiterbildungen werden in den Unteransprüchen beschrieben.

Eine erfindungsgemäße Vorrichtung zum Trennen von Gemischen, welche Öl oder Bitumen und Zusatzstoffe enthalten, umfasst ein Reaktionsgefäß, in das durch eine Beschickungsöffnung und/oder eine Befüllungsleitung das Gemisch und ein Lösungsmittel in einen Reaktionsraum eingebracht werden können. Vorzugsweise wird durch eine Beschickungsöffnung das Gemisch eingefüllt, während durch die Befüllungsleitung das Lösungsmittel eingebracht wird, aus Gründen der Platzersparnis kann zu diesem Zweck aber auch nur eine Öffnung vorgesehen sein. Die Öffnung kann in jedem Fall über ein Ventil geschlossen werden.

Im Reaktionsraum löst das Lösungsmittel das öl- oder bitumenhaltige Material von den Zusatzstoffen. Somit werden die Zusatzstoffe weitestgehend von ihrer Ummantelung befreit und gereinigt und können wie neu hergestelltes Material klassiert werden. Dieser Vorgang kann mehrmals durchgeführt werden, bis die gewünschte Reinheit der Zusatzstoffe erreicht ist. Dieser "Waschvorgang" kann dabei ohne zusätzliche Wärmezufuhr bei Raumtemperatur stattfinden.

Das öl- oder bitumenbeladene Lösungsmittel wird über eine Ableitung aus dem Reaktionsraum entfernt, während die Zusatzstoffe in diesem Verbleiben. Zum Trocken des im Reaktionsraums verbliebenen Materials und Entfernen des sich noch im Reaktionsraum befindlichen Lösungsmittels wird der Reaktionsraum aufgeheizt, danach das Material durch eine Schleuse aus diesem entfernt. Dabei kann es vorteilhaft sein, unter der Schleuse ein Transportband vorzusehen, dass die Zusatzstoffe sofort weitertransportiert. Alternativ kann statt durch eine Schleuse auch durch Kippen des Reaktionsgefäßes das Material durch die Beschickungsöffnung wieder entfernt werden.

Die Ableitung führt in einen Vorratsbehälter, in dem sich das öl- oder bitumenbeladene Lösungsmittel als Satz auf dem Boden sammelt, während sich das Lösungsmittel im oberen Teil des Vorratsbehälters, dem Dampfraum, in der Gasphase befindet. Vom Boden des Vorratsbehälters aus geht mindestens eine Leitung, die Abzugsleitung, zu Auffangbehältern. Wird die Abzugsleitung geöffnet, beispielsweise durch Öffnen eines darin enthaltenen Ventils, so fließt das öl- oder bitumenbeladene Lösungsmittel in den Auffangbehälter. Der Auffangbehälter wird geheizt, um das Lösungsmittel vom Öl bzw. Bitumen zu trennen. Das verdampfte Lösungsmittel wird durch eine Steigleitung, die vom Auffangbehälter in den Dampfraum des Vorratsgefäßes führt, abtransportiert, während das Öl oder Bitumen im Auffangbehälter zurückbleibt. Ein gefüllter Auffangbehälter kann nach Schließen der Ventile entfernt und durch einen leeren ersetzt werden.

Im Dampfraum wird das Lösungsmittel durch eine geeignete Temperatur stets in der Dampfphase gehalten. Über eine Leitung steht der Dampfraum mit einem Kondensationsgefäß in Kontakt, sodass das Lösungsmittel in das Kondensationsgefäß gelangen kann und dort verflüssigt wird. Das verflüssigte Lösungsmittel kann von hier wieder in ein Reaktionsgefäß gefüllt werden, um einen erneuten Waschvorgang zu starten.

In einer vorteilhaften Weiterbildung weist der Reaktionsraum an der Ableitung einen Partikelfilter auf, das verhindert, dass feine Partikel mit abgesaugt werden.

Zur Unterstützung des Waschvorgangs können im Reaktionsraum auch Durchmischungsvorrichtungen wie Rührwerke oder Ultraschallreinigungsvorrichtungen zur verbesserten Durchmischung des Lösungsmittels enthalten sein.

Um einen kontinuierlichen Waschvorgang zu gewährleisten, kann eine erfindungsgemäße Vorrichtung in vorteilhafter Weise mehrere Reaktionsräume aufweisen, die parallel zueinander geschaltet sind. In jedem Reaktionsraum findet dann ein Waschvorgang statt, wobei die einzelnen Waschvorgänge besonders vorteilhaft zeitversetzt ablaufen, um ein gleichmäßiges Ansammeln der getrennten Materialien zu gewährleisten. Ebenso können mehrere Auffangbehälter vorgesehen sein, um kontinuierlich Öl oder Bitumen aufzufangen.

Die Ableitung aus dem Reaktionsraum in den Vorratsbehälter ist in vorteilhafter Weise nach dem Prinzip eines Flüssigkeitshebers konstruiert. Somit erfolgt eine Ableitung allein aufgrund des steigenden Lösungsmittelstands automatisch.

Die erfindungsgemäße Vorrichtung kann über eine Pumpe auf einem leichten Unterdruck, also z. B. zwischen 5 und 10 mbar unterhalb des Atmosphärendrucks, gehalten werden. Somit wird verhindert, dass im Fall undichter Stellen Lösungsmittel in die Umgebung austritt. Die Pumpe oder das dazu verwendete Gebläse kann mit einem zusätzlichen Kondensor versehen sein, der auf wenige Grad über 0 °C gekühlt ist und Lösungsmitteldämpfe aus der Abluft kondensiert, sodass das Lösungsmittel ständig wiederverwendet werden kann und kein Austreten des Lösungsmittels in die Umwelt stattfindet.

Um das Lösungsmittel im Dampfraum in der Dampfphase zu halten, wird der Dampfraum auf einer Temperatur von 60 °C bis maximal 65 °C gehalten, da bei höheren Temperaturen Siedeverzug auftritt.

Der Auffangbehälter wird vorteilhaft zum Ausheizen auf einer Temperatur zwischen 75 °C und 95 °C gehalten, allerdings kann dieser Bereich in Abhängigkeit vom Siedepunkt des verwendeten Lösungsmittels variiert werden.

Der Kondensor muss zum Kondensieren des Lösungsmittels auf niedrigen Temperaturen, vorzugsweise zwischen 10 °C und 15 °C gehalten werden. Beim Einsatz höherer Temperaturen wird ein größerer Kondensor benötigt, während bei niedrigeren Temperaturen zur vermehrten Kondensation von Wasser führen, was durch einen Filter wieder entfernt werden muss.

Als Lösungsmittel kann besonders vorteilhaft Dichlormethan verwendet werden. Es können allerdings auch Chloroform, Diesel, Benzin, Aceton, Methanol, Tetrahydrofuran, Butylmethylether, Tetrachlorkohlenstoff, Propangas, Benzol oder Toluol zu diesem Zweck eingesetzt werden.

Das Trennen des öl- oder bitumenbeladenen Lösungsmittels von den Zusatzstoffen im Reaktionsraum kann zeitlich gesteuert oder geregelt werden, um die Effizienz des Verfahrens zu erhöhen. Als Steuer- bzw. Regelgröße kann dabei eine durch ein Messgerät, das eine Trübungsmessung durchführt, ermittelte Eintrübung des Lösungsmittels verwendet werden.

Eine weitere vorteilhafte Weiterbildung sieht vor, dass der Reaktionsraum zum Ausheizen ca. 10 Minuten auf eine Temperatur von 60 °C geheizt wird. Alternativ kann, um die Trocknungszeiten zu verkürzen, der Reaktionsraum in Abhängigkeit vom verwendeten Material und dem Siedepunkt des Lösungsmittels für eine kürzere Zeit auf eine Temperatur über 100 °C erhitzt werden. Zur Unterstützung kann Luft durch den Reaktionsraum gesaugt werden, was insbesondere vorteilhaft ist, wenn die Vorrichtung unter Unterdruck gehalten wird.

Ebenso kann zur Unterstützung der Trocknung Luft durch den Auffangbehälter gesaugt oder geblasen werden. Dies ist, wie bereits erwähnt, insbesondere dann vorteilhaft, wenn die Vorrichtung unter Unterdruck gehalten wird.

In besonders vorteilhafter Weise werden die Vorrichtung und das Verfahren bei der Behandlung von bitumenhaltigem Asphalt eingesetzt.

Das Endprodukt des Verfahrens besteht aus Bitumen oder Öl und Zusatzstoffen, vorzugsweise mineralischen Zuschlagsstoffen, die durch das Verfahren voneinander getrennt wurden.

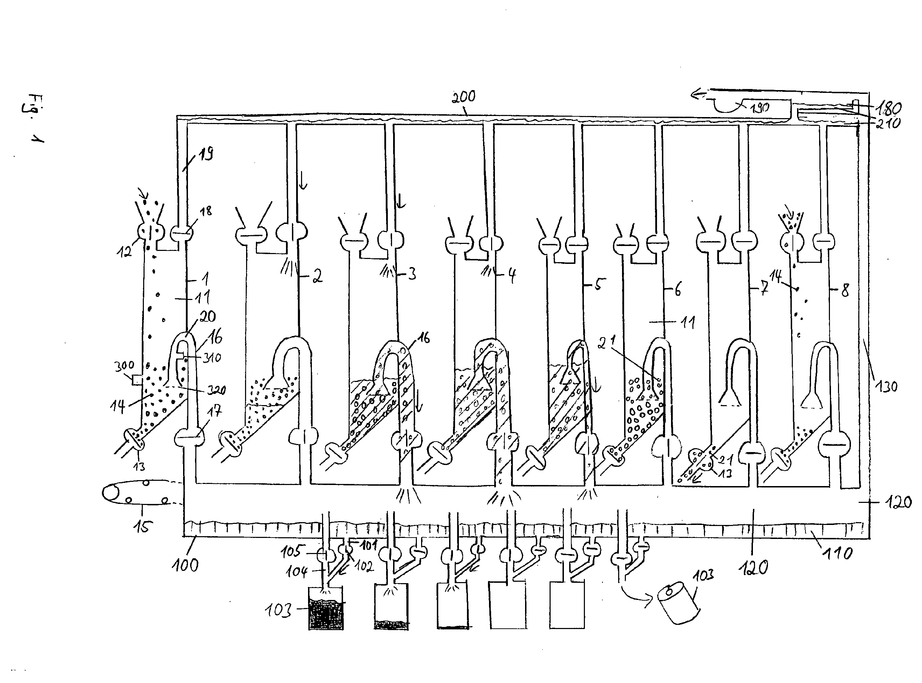

Ein Ausführungsbeispiel der Erfindung ist in Fig. 1 zeichnerisch dargestellt und wird anhand dieser Figur erläutert.

Fig. 1 zeigt eine schematische Ansicht einer erfindungsgemäßen Vorrichtung mit mehreren Reaktionsgefäßen, wobei in den einzelnen Reaktionsgefäßen unterschiedliche Schritte des Verfahrens dargestellt sind.

Die Reaktionsgefäße 1- 8 sind jeweils identisch aufgebaut, auch wenn aus Gründen einer verbesserten Übersichtlichkeit nicht alle Bauteile an jedem Reaktionsgefäß 1 - 8 dargestellt sind. Jedes Reaktionsgefäß 1 - 8 umfasst einen Reaktionsraum 11, der über eine Beschickungsöffnung 12 und ein darin enthaltenes Ventil mit dem zu reinigenden Gut 14 gefüllt werden kann. Das zu reinigende Gut 14 ist im dargestellten Fall Asphalt, der Bitumen und mineralische Zusatzstoffe enthält. Außerdem kann über eine Befüllungsleitung 19 durch Öffnen des darin enthaltenen Ventils 18 flüssiges Lösungsmittel 210, im vorliegenden Fall Dichlormethan, in den Reaktionsraum eingefüllt werden.

Das Lösungsmittel 210 löst die öl- oder bitumenhaltigen Bestandteile des zu reinigenden Guts 14 von den Zusatzstoffen, was im Folgenden als "Waschvorgang" bezeichnet wird. Durch den steigenden Flüssigkeitsstand des Lösungsmittels 210 wird schließlich das öloder bitumenbeladene Lösungsmittel 210 über eine Ableitung 16 in einem Bogen 20 aus dem Reaktionsraum 11 entfernt und in einen Vorratsbehälter 100 geleitet. Diese Ableitung 16 ist im vorliegenden Ausführungsbeispiel ein Flüssigkeitsheber und kann über ein Ventil 17 geschlossen werden. Dieser Waschvorgang kann solange wiederholt werden, bis der gewünschte Reinheitsgrad des zu reinigenden Gutes erreicht wurde. Durch das Vorsehen mehrerer Vorratsbehälter kann in weiteren Ausführungsformen auch eine gleichzeitige Trennung mehrerer Produkte erfolgen.

Zur Verbesserung der Durchmischung ist eine Durchmischungsvorrichtung 300 angebracht, die ein Rührwerk oder eine Ultraschallreinigungsvorrichtung umfasst. Außerdem ist in der Ableitung 16 ein Messgerät 310 enthalten, welches die Trübung des öl- oder bitumenbeladenen Lösungsmittels 210 misst und den Waschvorgang in Abhängigkeit von der gemessenen Trübung steuert oder regelt. So wird bei einer zu hohen festgestellten Trübung zusätzliches Lösungsmittel 210 eingefüllt. Das Messgerät 310 enthält zu diesem Zweck eine Lichtquelle, beispielsweise eine LED, und einen Detektor, z. B. ein Bolometer, und misst die Absorption des von der Lichtquelle ausgesandten Lichts in dem beladenen Lösungsmittel 210. Alternativ ist auch eine andere Strahlungsquelle mit dazu passendem Detektor möglich. Außerdem ist unterhalb des Bogens 20 an der Ableitung ein Partikelfilter 320 im Reaktionsgefäß 11 enthalten, das verhindert, dass feine Partikel mit abgesaugt werden. Dieser Partikelfilter 320 ist an einer trichterförmigen Erweiterung, die als Absaugöffnung fungiert, angebracht.

Nachdem das Lösungsmittel 210 aus dem Reaktionsgefäß 11 abgeflossen ist, wird das Reaktionsgefäß ca. 10 Minuten lang auf 60 °C erhitzt bzw. für eine kürzere Zeit auf über 100 °C erhitzt, um das nun gereinigte Gut 21 zu trocknen und verbliebene Lösungsmittelreste endgültig zu entfernen. Zur Unterstützung des Trocknens kann auch Luft durch den Reaktionsraum 11 gesaugt werden.

Das nun getrocknete und gereinigte Gut wird über eine Schleuse 13 durch Öffnen eines darin enthaltenen Ventils aus dem Reaktionsraum 11 entfernt und kann über ein Transportband 15 weitertransportiert werden.

Die in Fig. 1 dargestellten Reaktionsgefäße 1 - 8 sind parallel geschaltet und erlauben eine kontinuierliche Reinigung des zu reinigenden Guts 14. In Reaktionsgefäß 1 wird das zu reinigenden Gut 14 eingefüllt, während in Reaktionsgefäß 2 das Gut 14 bereits eingefüllt wurde und nun Lösungsmittel 210 zugegeben wird. In Reaktionsgefäß 3 ist das Öl oder Bitumen im Lösungsmittel 210 gelöst und fließt über die Ableitung 16 in den Vorratsbehälter 100, der gleiche Vorgang ist in Reaktionsgefäß 4 dargestellt, allerdings ist hier die Trübung des Lösungsmittels 210 bereits deutlich reduziert, da ein Großteil des Öls bzw. Bitumens bereits ausgewaschen ist. In gleicher Weise ist in Reaktionsgefäß 5 eine weitergehende Auswaschung es Lösungsmittels 210 dargestellt, die sich durch eine stetig abnehmende Trübung des beladenen Lösungsmittels 210 darstellt. In Reaktionsgefäß 6 ist das Lösungsmittel aus dem Reaktionsraum 11 entfernt und nur das gereinigte Gut 21 verbleibt darin. Dieses Gefäß wird daher erhitzt zum Trocknen des gereinigten Guts 21 und Entfernen verbliebener Lösungsmittelreste. Zur Erhitzung ist dafür eine, hier nicht dargestellte, Heizung an den Außenwänden des Reaktionsgefäßes angebracht. In Reaktionsgefäß 7 wird die Schleuse 13 durch Öffnen des Ventils geöffnet und das gereinigte Gut 21 fällt auf ein unter dem Ausgang der Schleuse 13 verlaufendes Transportband 15. In Reaktionsgefäß 8 wird nun wiederum neues, zu reinigendes Gut 14 eingefüllt. Der Waschvorgang in den Reaktionsgefäßen 1 - 8 wird bei Raumtemperatur durchgeführt.

Im Vorratsgefäß 100 bildet das mit Öl oder Bitumen beladene Lösungsmittel einen Satz 110, der sich am Boden des Vorratsgefäßes 100 sammelt. Von dort gelangt dieser Satz über das Öffnen eines Ventils 102 einer Abzugsleitung 101 in einen Auffangbehälter 103, beispielsweise ein Fass. Der Auffangbehälter 103 wird auf eine Temperatur von 75 °C bis 95 °C erhitzt, sodass das Lösungsmittel 210 verdampft und das Bitumen bzw. das Öl im Auffangbehälter 103 zurückbleibt. Das Verdampfen kann beschleunigt werden, indem Luft durch den Auffangbehälter gesaugt oder geblasen wird. Der gewählte Temperaturbereich ist für die Verwendung von Dichlormethan als Lösungsmittel 210 ausgelegt und kann bei Verwendung anderer Stoffe sich geringfügig verändern.

Das verdampfte Lösungsmittel 210 entweicht über eine Steigleitung 104 bei Öffnung des in der Steigleitung enthaltenen Ventils 105 in einen Dampfraum 120. Dieser Dampfraum befindet sich im Vorratsbehälter 100 oberhalb des Satzes 110 und kann auch durch Trennelemente von diesem separiert sein. Im Dampfraum herrscht eine Temperatur von 60 °C bis maximal 65 °C. Dieser Temperaturbereich hält das Lösungsmittel 210 in der Gasphase, während ein bei noch höheren Temperaturen auftretender Siedeverzug verhindert wird.

Der Auffangbehälter 103 kann nach Ausheizen und Abkühlen des Bitumens oder Öls entfernt werden und durch einen neuen ersetzt werden, wobei durch Vorsehen mehrerer Auffangbehälter 103 ein kontinuierliches Abscheiden des Bitumens oder Öls und kontinuierlicher Wechsel der Auffangbehälter 103 ermöglicht wird.

Das Vorratsgefäß 100, genauer der Dampfraum 120, ist über eine Leitung 130 mit einem Kondensationsgefäß 200 verbunden. Das gasförmige Lösungsmittel 210 gelangt über diese Leitung 130 in einen Kondensor oder Kondensationsgefäß 200, das auf einer Temperatur von 10 °C bis 15 °C gehalten wird. Unterhalb dieser Temperaturen kommt es vermehrt zur Kondensation von Wasser, das durch einen hier nicht dargestellten Filter entfernt werden muss. Das Lösungsmittel 210 wird im Kondensationsgefäß 200 durch Kondensation verflüssigt und kann über eine Befüllungsleitung 19 wieder den Reaktionsgefäßen 1 - 8 zugeführt werden.

Die Vorrichtung wird durch ein Gebläse 190 oder eine Pumpe auf leichtem Unterdruck, ca. 5 bis 10 mbar unterhalb des Atmosphärendrucks, gehalten. Dadurch kann über eventuell vorhandene oder auftretende Leckagen kein Lösungsmittel in die Umgebung austreten. Durch das Gebläse 190 und den dadurch hergestellten Unterdruck wird auch das Durchblasen der Auffangbehälter 103 oder der Reaktionsräume 11 ermöglicht. Dieses Gebläse ist mit einem zusätzlichen Kondensationsgefäß bzw. Kondensor 180 verbunden, der Lösungsmitteldämpfe aus der Abluft kondensiert, sodass das Lösungsmittel ohne Verluste für weitere Waschvorgänge zur Verfügung steht. Dazu wird der Kondensor 180 auf wenige Grad über 0 °C abgekühlt.

### Bezugszeichenliste:

- 1-8: Reaktionsgefäße
- 11: Reaktionsraum
- 12: Beschickungsöffnung
- 13: Schleuse
- 14: zu reinigendes Gut
- 15: Transportband
- 16: Ableitung
- 17: Ventil
- 18: Ventil
- 19: Befüllungsleitung
- 20: Bogen
- 21: gereinigtes Gut
- 100: Vorratsbehälter
- 101: Abzugsleitung
- 102: Ventil
- 103: Auffangbehälter
- 104: Steigleitung
- 105: Ventil
- 110: Lösungsmittelsatz
- 120: Dampfraum
- 130: Leitung
- 180: zusätzlicher Kondensor
- 190: Gebläse
- 200: Kondensationsgefäß
- 210: Lösungsmittel
- 300: Durchmischungsvorrichtung
- 310: Messgerät
- 320: Partikelfilter

## Patentansprüche

1. Vorrichtung zum Trennen von Gemischen (14), welche Öl oder Bitumen und Zusatzstoffe enthalten, **dadurch gekennzeichnet, dass** die Vorrichtung mindestens ein Reaktionsgefäß (1), umfassend einen Reaktionsraum (11), eine Beschickungsöffnung (12) und eine Ableitung (16),
einen Vorratsbehälter (100), umfassend einen Dampfraum (120),
mindestens einen Auffangbehälter (103), umfassend eine Abzugsleitung (101) und eine Steigleitung (104),
und ein Kondensationsgefäß (200) umfasst, wobei die Ableitung (16) mit dem Vorratsbehälter (100),
der Vorratsbehälter (100) über die Abzugsleitung (101) mit dem Auffangbehälter (103),
der Auffangbehälter (103) über die Steigleitung (104) mit dem Dampfraum (120),
der Dampfraum (120) über eine Leitung (130) mit dem Kondensationsgefäß (200),
und der Kondensationsgefäß (200) über eine weitere Leitung (19) mit dem Reaktionsraum (11) in Verbindung steht.

2. Vorrichtung nach Anspruch 1, **dadurch gekennzeichnet, dass** der Reaktionsraum (11) einen Partikelfilter (320) enthält.

3. Vorrichtung nach einem der vorhergehenden Ansprüche, **dadurch gekennzeichnet, dass** im Reaktionsraum (11) Rührwerke oder Ultraschallreinigungsvorrichtungen (300) zur verbesserten Durchmischung eines Lösungsmittels (210) enthalten sind.

4. Vorrichtung nach einem der vorhergehenden Ansprüche, **dadurch gekennzeichnet, dass** mehrere Reaktionsgefäße (1, 2, 3, 4, 5, 6, 7, 8) parallel angeordnet sind.

5. Vorrichtung nach einem der vorhergehenden Ansprüche, **dadurch gekennzeichnet, dass** die Ableitung (16) einen Flüssigkeitsheber umfasst.

6. Vorrichtung nach einem der vorhergehenden Ansprüche, **dadurch gekennzeichnet, dass** die Vorrichtung einen leichten Unterdruck von 5 bis 10 mbar unterhalb des Atmosphärendrucks aufweist.

7. Vorrichtung nach einem der vorhergehenden Ansprüche, **dadurch gekennzeichnet, dass** der Dampfraum (120) eine Temperatur von 60 °C bis maximal 65 °C aufweist.

8. Vorrichtung nach einem der vorhergehenden Ansprüche, **dadurch gekennzeichnet, dass** der Auffangbehälter (103) eine Temperatur von 75 °C bis 95 °C aufweist.

9. Vorrichtung nach einem der vorhergehenden Ansprüche, **dadurch gekennzeichnet, dass** der Kondensor (200) eine Temperatur von 10 °C bis 15 °C aufweist.

10. Verfahren zum Trennen von Gemischen (14), welche Öl oder Bitumen und Zusatzstoffe enthalten, umfassend die folgenden Schritte:
a) Lösen von öl- oder bitumenhaltigen Bestandteile aus einem Gemisch in einem Lösungsmittel (210) in einem Reaktionsraum (11);
b) Trennen des öl- oder bitumenbeladenen Lösungsmittels (210) von Zusatzstoffen des Gemischs und Weiterleiten des öl- oder bitumenbeladenen Lösungsmittels (210) in einen Vorratsbehälter (103);
c) Heizen des Reaktionsraums (11) zum Trocknen der Zusatzstoffe des Gemischs und zum Entfernen des verbliebenen Lösungsmittels (210);
d) Verdampfen des öl- oder bitumenbeladenen Lösungsmittels (210) in einem mit dem Vorratsbehälter (100) verbundenen Auffangbehälter (103) und Auffangen des Öls oder Bitumens im Auffangbehälter (103) und des Lösungsmitteldampfs in einem Dampfraum (120) des Vorratsbehälters (100);
e) Ableiten des Lösungsmitteldampfes aus dem Dampfraum (120) und Kondensieren des Lösungsmittels in einem Kondensor (200).

11. Verfahren nach Anspruch 9, **dadurch gekennzeichnet, dass** das Lösungsmittel (210) Dichlormethan, Chloroform, Diesel, Benzin, Aceton, Methanol, Tetrahydrofuran, Butylmethylether, Tetrachlorkohlenstoff, Propangas, Benzol oder Toluol umfasst.

12. Verfahren nach einem der vorhergehenden Ansprüche, **dadurch gekennzeichnet, dass** das Trennen des öl- oder bitumenbeladenen Lösungsmittels (210) zeitlich gesteuert oder geregelt wird, vorzugsweise über eine Trübungsmessung des Lösungsmittels (210).

13. Verfahren nach einem der vorhergehenden Ansprüche, **dadurch gekennzeichnet, dass** der Reaktionsraum (11) zum Ausheizen 10 Minuten auf 60 °C erwärmt wird.

14. Verfahren nach einem der vorhergehenden Ansprüche, **dadurch gekennzeichnet, dass** durch den Auffangbehälter (103) Luft zum beschleunigten Verdampfen des Lösungsmittels (210) gesaugt oder geblasen wird.

15. Verfahren nach einem der vorhergehenden Ansprüche, **dadurch gekennzeichnet, dass** als Gemisch (14) bitumenhaltiger Asphalt verwendet wird.
